Europäisches Patentamt

(19) European Patent Office

Office européen des brevets

(11) Publication number: **0 085 484**
**A1**

(12) **EUROPEAN PATENT APPLICATION**

(21) Application number: **83300130.8**

(22) Date of filing: **11.01.83**

(51) Int. Cl.³: **B 21 C 51/00**
**B 23 K 26/00**

(30) Priority: **13.01.82 GB 8200911**

(43) Date of publication of application:
**10.08.83 Bulletin 83/32**

(84) Designated Contracting States:
**BE DE FR IT LU NL**

(71) Applicant: **British Steel Corporation**
**9 Albert Embankment**
**London SE1 7SN(GB)**

(72) Inventor: **Pritchard, William David Nicholas**
**'Cloverleaf' Belmongate**
**Guisborough Cleveland(GB)**

(72) Inventor: **Smith, Brian Edward**
**42 Cambrian Avenue**
**Redcar Cleveland(GB)**

(74) Representative: **Heath, Peter William Murray**
**FRY HEATH & CO. Seloduct House 16-18 Station Road**
**Redhill Surrey RH1 1NF(GB)**

(54) Improvements in or relating to in-mill marking of metal products.

㊿ The invention provides a method of marking a metal product comprising the steps of producing a laser capable of visibly thermally affecting the surface of the product concerned, directing the laser at the product and controlling the operation and direction of the laser to apply thereby a required marking to the surface of the product.

FIG.1.

EP 0 085 484 A1

# Improvements in or relating to in-mill

# marking of Metal Products.

This invention relates to the in-mill marking of metal products. The invention is particularly concerned with the marking of finished or semi-finished metal products, especially, although not exclusively, the in-mill marking of ferrous material.

It is common practice to provide in-mill marking of various kinds of products to identify, for example, the mill or works; the manufacturing company; the quality of the product; and/or the constituents of the product.

Such marking is commonly accomplished by stamping or by painting the product or by applying appropriate labels to the product. Each of these methods of marking intrinsically incorporates a number of disadvantages and drawbacks which include, respectively, the introduction of high stress areas in the product, considerable maintenance cost when using automatic paint spraying equipment (or alternatively high labour requirements and labour errors with hand painting) and the problem of ensuring that labels remain securely attached to the products for as long as required.

It is an object of the present invention to provide in-mill marking which overcomes or at lease substantially reduces the disadvantages hereinabove mentioned.

According to one aspect of the present invention there is provided a method of marking a metal product comprising the steps of producing a laser capable of visibly thermally affecting the surface of the product concerned, directing the laser at the product and controlling the operation and direction of the laser to apply thereby a required marking to the surface of the product.

According to another aspect of the present invention there is provided apparatus for marking a metal product comprising a laser device and control means for operating the device such as to enable the laser to be directed towards and thermally mark the product in a required manner.

By use of an appropriate power of laser generated, use of a suitable form of radiation, together with an appropriate traverse speed, it has been found possible to mark the surface of the product with a visible legend without significant gouging scoring or marking of the product and without, therefore, having any significant below-surface effects upon the product.

It has been found possible to produce a mark varying on a ferrous product from a silver grey colour legend to an apparently black, slightly idented legend.

One form of suitable laser vaporises a small quantity of metal to create the required marking. However the metal adjacent the vapourised mark is metallurgically subject to minimal microstructure change.

Facility for focusing the laser beam may be provided. Most importantly this enables maximising energy density on the product without necessarily increasing laser energy in any given situation.

The marking characteristics can be varied by applying "spot wobble" techniques to the laser control mechanism to ensure a certain degree of oscillation of the laser and therefore spread of its impact upon the product, and similarly by initiating the laser in a pulsed manner and by varying the frequence of the pulse. Yet again the heaviness of marking can be increased by repetition of the laser traverse, and/or by increasing the traverse time.

Accelerated artificial weathering tests of 1000 hours have shown that the markings on products subjected to the invention can be extremely durable and visible after considerable weathering experience.

Whilst the laser marking according to the invention can be applied to a product in a crude semi-finished surface state, we have found it particularly advantageous to apply the laser marking to a product surface which has been provided with a coating of paint or a similar coloured surface coating such that the laser burns the coating as well as surface working the product. We have found that with this arrangement the visibility is greatly increased, particularly after weathering the product concerned. In such cases it is usually found that corrosion of the laser marked legends provides increased contrast with the background coated surface and indeed can well improve visibility of the marking over a considerable period of time. The painting or similar coating of the surface may additionally be used to provide a coloured coding in relation to any particular desired characteristics of the product concerned.

It is to be noted that the strength of laser marking and the depth of marking and the type and thickness of paint and type of painting technique can be varied in dependence upon known subsequent processing stps of the product concerned. Thus, for example where plates to be subjected to subsequent heat treatment and/or cold levelling are to be marked, appropriately adherent sprayed paint may be used, or a deeper penetrating laser, or the use of paint may be omitted to ensure greater laser marking of the plate itself.

Control of the laser device is conveniently arranged from a computer memory and alphanumeric characters or other symbols may be marked upon the product from such a computer memory either by using a keyboard or directly from a stored programme. Writing times are of course variable and depend, inter alia, on the previously mentioned laser control parameters. We have found however that it is possible for example to mark 43 characters of 8 x 8 mm dimensions upon a yellow primer painted steel product with good resultant visibility in 14 seconds.

Conveniently operation of the marking arrangement is in association with viewing of the product by a camera, such as a TV camera, to enable immediate visual feedback to a remote operator, for example on a visual display unit, of the marking operation.

The invention is particularly applicable to the marking of steel plate strip or sections, and may be carried out in a forming mill in a cooling stage between processing steps.

The laser arrangement may be carried on a small jib crane or a gantry disposed above the product path.

In order that the invention may be more readily understood one embodiment thereof will now be described by way of example with reference to the accompanying drawings in which:-

Figure 1 is a schematic isometric view of one form laser marking apparatus in accordance with the invention; and

Figure 2 is a schematic side elevation of a second form of apparatus according to the invention.

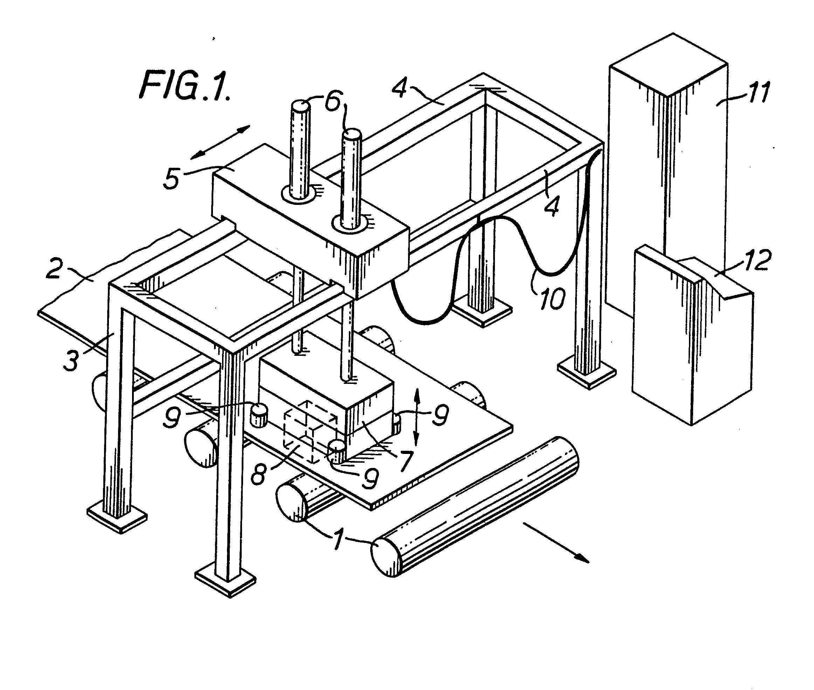

The apparatus illustrated in Figure 1 is intended for use in a steel plate mill and is located above rollers 1 carrying plates through a cooling zone prior to their passage through a guillotine section. Plates in this zone are dropping in temperature from approximately 900°C to approximately 100°C.

The apparatus includes a gantry 3 located above the plate path rollers 1. Mounted on two upper rails 4 of the gantry 3 is a carriage 5 carrying twin lifting and lowering screws 6 to the lower ends of which are attached a marking head 7.

As can be seen the marking head can be lowered upon a plate 2 located on its rollers beneath the gantry 3.

The marking head 7 incorporates a unit 8 for descaling a portion of the surface of the plate and for applying primer paint to the descaled portion of the surface of the plate, and a laser gun unit for applying appropriate marking symbols to the painted descaled portion of the surface of the plate.

Shock absorbers 9 may be provided on the marking head 7 to prevent any damage when it is lowered into contact with the plate.

Control of the carriage and the depending marking head is via a power cable 1 from a control module 11 incorporating a micro-processor computer circuit by means of which the laser assembly may be controlled to apply the required markings to the plate. Alongside the control module 11 is a visual display unit 12 and gantry controls for an operator.

It has been found possible, as will be appreciated from the embodiment illustrated in Figure 1, to apply laser marking in accordance with the invention to steel plate surfaces to which has previously been applied a high temperature marking paint with the plate at a temperature approaching 900°C.

In one example of the use of the apparatus illustrated a laser gun operating at 20.0 amps with a frequency of 10 KHz and an output power of 50 watts multimode, with zero "spot wobble", produced 12 alphanumeric characters of height 24 mm in 22 seconds. The marking was found to be easily readable, exact, and uniform in thickness.

The laser concerned is of infrared radiation and its control is by means of a pair of galvanometer mirrors driven by a computer, focusing being by means of a lens.

Whilst the local heating produced by a laser produces changes in the surface layer of the steel produce concerned, it does not add any heat stress immediately below the surface and therefore has no detrimental effect upon the product.

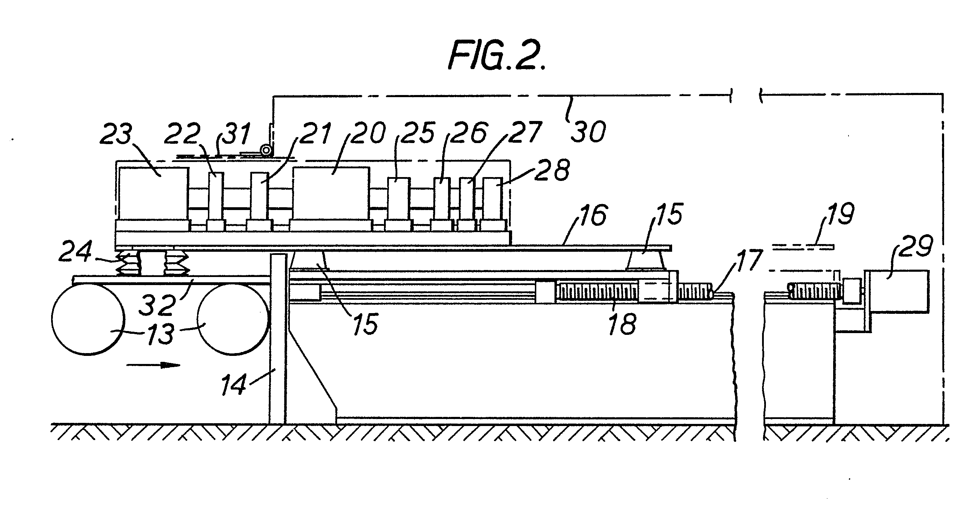

The apparatus of Figure 2 has the same purpose of that of Figure 1 and is broadly similar in function. However to increase operation safety and cleanliness of the laser unit, a retractable arrangement for the laser unit is provided.

The apparatus includes two rolls 13 level with a plate roller table (not shown). The rolls 13 are adjacent a support structure 14 carrying, via anti-vibration mounts 15, a structure 16 movable on slides 17 by means of a ballscrew 18, driven from motor 29, between the operational position illustrated and a retracted position indicated at 19.

The structure 16 carries a laser unit comprising a laser head 20, a polariser 21 an aperture 22, an auto-focus unit 23 of a kind more fully described hereinbelow, and an air-curtain arrangement including depending bellows 24 to prevent ingress of dust to the unit and ensure safe use of lasers. Also included in the unit is a switch 25, a further aperture 26, a rear mirror 27, and a photo-detector 28.

The structure 16 is housed within a safety frame and dust cover 30 having a spring-loaded flap type of front opening 31.

In operation, a prepared and painted plate 32 to be marked is moved on to the rolls 13, the laser unit on structure 16 is moved from cover 30 and bellows 24 lowered to the surface of the plate. Computer controlled laser marking is then carried out on the plate surface, whereafter the bellows 24 and structure 16 is retracted and the marked plate moved away.

For in-mill marking of the kind described in the two examples hereinabove set out, an auto-focussing facility for the laser can be of considerable practical importance in ensuring effective marking. Thus, in practice the workpiece cannot be moved because of its size and weight, so that to ensure sharp focussing it is necessary to move the laser or optical arrangement. This can be done by means of a servomotor acting on the focussing lens or on the total optical arrangement. The "aim" point of the servo control is provided by a position sensor providing a position control over a distance of, say, $50 \pm 15$mm (50 mm being in this case the nominal distance from the optical arrangement to the product). Sensing over this range may, for example, be by means of a non-contacting inductive sensor having an output proportional to position.

It is to be understood that although the invention has been particularly described in relation to the application of identification and similar marking, it can be utilised in the provision of the marking-out of products for sizing and/or subsequent cutting processes.

CLAIMS

1.   A method of marking a metal product comprising the steps of producing a laser capable of visibly thermally affecting the surface of the product concerned, directing the laser at the product and controlling the operation and direction of the laser to apply thereby a required marking to the surface of the product.

2.   A method as claimed in Claim 1 wherein the product is provided with a coloured surface coating prior to laser marking.

3.   A method as claimed in Claim 1 wherein the coating is provided with a heat resistant paint.

4.   A method as claimed in any one of the preceding claims wherein the laser and its operation are arranged such as to vaporise metal from the product surface to produce a visible mark.

5.   A method as claimed in any one of the preceding claims wherein the operation of the laser during marking is computer controlled.

6.   Apparatus for marking a metal product comprising a laser device and control means for operating the device such as to enable the laser to be directed towards and thermally mark the product in a required manner.

7.   Apparatus as claimed in Claim 6 wherein operation of the laser device is by computer

8.   Apparatus as claimed in Claim 6 or 7 wherein auto-focussing means are provided for focussing the laser on the surface of the product.

9.   Apparatus as claimed in Claims 6,7 or 8 including means for applying a coloured coating to the surface of the product prior to laser marking.

10. A method of marking a metal product substantially as hereinbefore described with reference to Figure 1 or Figure 2 of the accompanying drawings.

11. Apparatus for marking a metal product substantially as shown in and as hereinbefore described with reference to Figure 1 or Figure 2 of the accompanying drawings.

FIG.1.

FIG.2.

European Patent Office

**EUROPEAN SEARCH REPORT**

0085484
Application number

EP 83 30 0130

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-B-2 726 454 (HOESCH WERKE AG)<br>* Claim 1; column 3 * | 1 | B 21 C 51/00<br>B 23 K 26/00 |
| X | DE-A-3 014 361 (MARWITZ & HAUSER)<br>* Complete document * | 1-8 | |
| X | US-A-3 920 951 (CHOVAN et al.)<br>* Claims; column 1, lines 42-46; figures * | 1,4-8 | |

**TECHNICAL FIELDS SEARCHED (Int. Cl. ³)**

B 21 C 51/00
B 23 K 26/00

The present search report has been drawn up for all claims

| Place of search<br>BERLIN | Date of completion of the search<br>07-04-1983 | Examiner<br>WUNDERLICH J E |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82